# DEMANDE DE BREVET EUROPEEN

(11) **EP 0 681 258 A1**
(43) Date de publication de la demande: **08.11.1995**
(21) Numéro de dépôt: 95401036.9
(22) Date de dépôt: 04.05.1995
(51) Int. Cl.: G06K 7/10, G06K 7/00

(54) **Agencement, notamment de télécommunications, associant un appareil et une carte à mémoire et/ou logique, appareil et carte correspondants**

(30) Priorité: 05.05.1994 FR 9405534
(71) Demandeur: ALCATEL BUSINESS SYSTEMS, F-75008 Paris (FR)
(72) Inventeur: Janin, Michel, F-92190 Meudon (FR); Duvernay, Jean-Marc, F-75011 Paris (FR)
(74) Mandataire: Schaub, Bernard

(57) **Abrégé**

Agencement, notamment de télécommunications, comportant au moins un appareil (1) communiquant avec une carte (4) à mémoire et/ou à logique, de type badge, reçue en vue de la mise en oeuvre de fonctions impliquant une coopération. L'appareil est doté de moyens (7) de réception de carte qui permettent de voir au moins une partie d'une des deux faces d'une carte et de moyens (16) de commande manuelle dont au moins certains sont positionnés au voisinage de la zone où se situe la partie visible d'une carte, chaque carte comportant des repères fonctionnels visuels (17) pour désigner chacun un moyen de commande manuelle (16) comporté par l'appareil parmi ceux qui sont disposés à proximité.

## Description

L'invention concerne les agencements, notamment de télécommunications, associant un appareil et une carte, de type badge, comportant au moins une mémoire et/ou une logique, en vue de la mise en oeuvre de fonctions impliquant la coopération d'un tel appareil avec une telle carte. Elle concerne aussi les appareils et les cartes pour de tels agencements.

Il existe de nombreux agencements dans lesquels il est prévu qu'un appareil, par exemple un terminal soit amené à coopérer avec une mémoire et/ou une logique d'une carte, de type badge, qui lui est alors associée pour permettre de réaliser des opérations déterminées.

Comme il est connu, de tels agencements sont susceptibles d'être exploités dans une très large gamme d'applications et il est envisageable de mettre un grand nombre de fonctions à disposition des utilisateurs pour une même application.

Tel est le cas notamment en télécommunications où les appareils mis à disposition des utilisateurs pour leurs communications avec leurs correspondants sont susceptibles de disposer de fonctionnalités très variables suivant les choix faits par et/ou pour les utilisateurs. Comme, pour différentes raisons, la plupart des utilisateurs n'exploite qu'un nombre très limité des fonctions possibles, il est habituel de permettre aux utilisateurs d'adapter les appareils qu'ils utilisent à leurs besoins, au moins dans une certaine mesure.

Il existe donc bon nombre d'appareils qui comportent un lecteur de carte, de type badge, et qui sont susceptibles de mettre à disposition une gamme de fonctions différentes déterminées au profit d'utilisateurs divers. Le choix des fonctions mis à disposition d'un utilisateur au niveau d'un appareil donné et des conditions de réalisation des opérations découlant de la mise en oeuvre de ces fonctions au niveau de cet appareil, qui est bien entendu dépendant des possibilités de l'appareil, est alors susceptible d'être déterminé par la carte associée à ce dernier, pour une utilisation.

A partir du moment où il existe des possibilités de choix pour les utilisateurs entre différentes fonctions mises à disposition par un agencement associant un appareil déterminé et une carte déterminée, il est couramment prévu des moyens de commande, notamment de commande par voie manuelle, par exemple de type touche, bouton, zone spécifique d'écran tactile, ou autre, pour permettre à un utilisateur de manifester son choix.

Dans de nombreux cas et notamment dans le domaine des télécommunications, il est classique d'exprimer certains choix par une manipulation successive d'un certain nombre de moyens de commande d'appareil selon des séquences sélectives déterminées, par exemple pour établir une communication de type téléphonique avec un correspondant distant.

Tout utilisateur doit donc avoir, d'une manière ou d'une autre, à sa disposition, en temps utile, la séquence de commande qui lui est alors nécessaire.

De même, bon nombre d'appareils offrent aux utilisateurs des possibilités fonctionnelles que ceux-ci ne sont amenés à exploiter que sporadiquement, bien qu'elles puissent être d'un grand intérêt, dans ces occasions, il y a donc de forts risques qu'un utilisateur ne retrouve pas, en temps utile, une séquence nécessaire qui est inhabituelle pour lui. Ceci peut être particulièrement gênant lorsque l'appareil est en fonctionnement et qu'il est susceptible de déclencher une opération indésirable, éventuellement irréversible, en cas d'absence ou d'erreur de manipulation des moyens de commande.

Il est donc souhaitable de fournir aux utilisateurs des moyens d'assistance en vue de faciliter la commande des appareils mis à leur disposition et de réduire les risques d'erreurs de manipulation des moyens de commande, lors des opérations où ces moyens sont exploités.

L'invention propose donc un agencement, notamment de télécommunications, doté de tels moyens et comportant un appareil agencé pour pouvoir communiquer avec des cartes à mémoire et/ou à logique, de type badge, reçues individuellement en vue de la mise en oeuvre de fonctions impliquant une coopération d'une carte reçue avec l'appareil. Comme il est connu, ce dernier comporte des moyens pour recevoir et positionner une carte d'une manière déterminée et des moyens leur permettant de communiquer par l'intermédiaire de moyens de communication complémentaires respectifs, lorsqu'elle est positionnée de la manière déterminée requise.

Selon une caractéristique de l'invention, l'appareil est doté de moyens de réception et de positionnement de carte qui permettent de voir au moins une partie d'une des deux faces d'une carte positionnée comme requis, et de moyens de commande manuelle dont au moins certains sont positionnés au voisinage de la zone où se situe la partie visible d'une carte positionnée comme requis, chaque carte comportant des repères fonctionnels visuels, disposés sur une face destinée à rester visible lorsque la carte est positionnée comme requis, pour désigner chacun un moyen de commande manuelle comporté par l'appareil parmi ceux qui sont disposés à proximité de la partie visible de cette carte quand celle-ci est en position requise.

L'invention propose aussi un appareil, notamment de télécommunications, agencé pour pouvoir communiquer avec des cartes à mémoire et/ou à logique, de type badge, reçues individuellement en vue de la mise en oeuvre de fonctions impliquant une coopération d'une carte reçue avec l'appareil. Ce dernier comporte des moyens pour recevoir et positionner une carte d'une manière requise déterminée leur permettant de communiquer par l'intermédiaire de moyens de communication complémentaires respectifs.

Selon une caractéristique de l'invention, l'appareil est doté de moyens de réception et de positionnement de carte qui permettent de voir au moins une partie d'une des deux faces d'une carte positionnée comme requis, et de moyens de commande manuelle dont au moins certains sont positionnés au voisinage de la zone où se situe la partie visible d'une carte positionnée comme requis, de manière à pouvoir être visuellement en regard, notamment dans l'alignement, de repères visuels de désignation correspondants portés par la partie visible de cette carte.

L'invention propose enfin une carte à mémoire et/ou à logique, de type badge, agencée pour être apte à communiquer avec des appareils, notamment de télécommunications, pris individuellement, en vue de la mise en oeuvre de fonctions impliquant la coopération de l'un quelconque des appareils avec la carte, préalablement positionnée d'une manière requise déterminée par rapport à lui, l'un et l'autre comportant des premiers moyens complémentaires de positionnement ainsi que des seconds moyens complémentaires leur permettant de communiquer lorsque la carte est positionnée de la manière requise.

Selon une caractéristique de l'invention, ladite carte comporte des repères visuels, disposés sur une face destinée à rester visible lorsque la carte est positionnée comme requis, pour désigner chacun un moyen de commande manuelle comporté par l'appareil parmi de tels moyens disposés à proximité de ladite carte quand celle-ci est en position requise.

L'invention, ses caractéristiques et ses avantages sont précisés dans la description qui suit en liaison avec les figures évoquées ci-dessous.

La figure 1 présente un schéma d'un agencement comportant un appareil destiné à coopérer avec une carte à mémoire et/ou logique, de type badge, une telle carte étant montrée en position dans l'appareil, une autre étant présentée hors de celui-ci.

La figure 2 présente une variante d'agencement selon l'invention où l'appareil et la carte sont montrés séparés.

La figure 3 présente un schéma bloc relatif à un agencement associant un appareil et une carte.

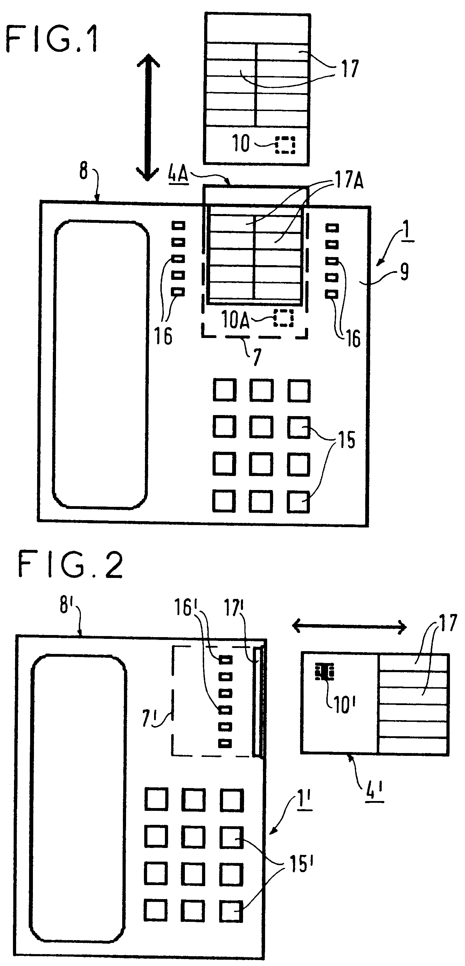

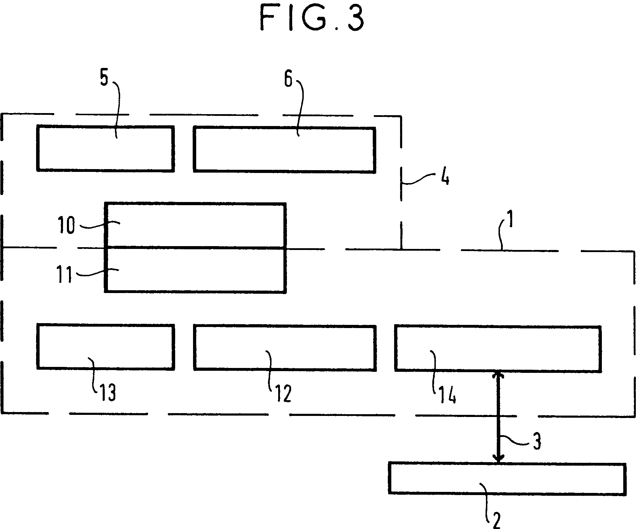

L'agencement proposé sur les figures 1 et 3 comporte au moins un appareil 1, par exemple un terminal téléphonique destiné à être relié à un centre de rattachement 2 par une liaison 3. Le fonctionnement de cet appareil 1 implique qu'au moins pour certaines des opérations qu'il est susceptible d'effectuer, qu'il est à communiquer avec une carte 4, 4A ou 4', de type badge, incorporant au moins une mémoire 5 et/ou une logique 6.

Dans diverses formes de réalisation connue, l'appareil 1 est prévu pour pouvoir être exploité avec différentes cartes présentant des caractéristiques communes et/ou les cartes sont susceptibles de pouvoir être exploitées avec différents appareils présentant eux aussi des caractéristiques communes.

Les appareils comportent des moyens leur permettant de recevoir et positionner une carte et des moyens pour communiquer avec elle.

Dans la forme de réalisation envisagée, la carte est reçue dans un logement, tel 7 ou 7', permettant de voir au moins une partie de la carte, lorsque cette carte est positionnée d'une manière déterminée pour laquelle elle est apte à communiquer avec l'appareil où elle est logée.

Les figures 1 et 2 montrent deux exemples de réalisation d'un tel logement, montré en pointillé. Le logement 7 proposé en figure 1 permet une insertion d'une carte, telle 4', au travers d'une embouchure ménagée dans une portion de paroi latérale 8 de l'appareil 1 au voisinage de la face avant 9 de cet appareil. Des moyens sont prévus pour assurer la mise en position de la carte en liaison avec des moyens complémentaires de cette carte. Ce sont par exemple des glissières parallèles qui sont montées en regard dans l'appareil à une distance leur permettant de recevoir et guider chacune un des bords parallèles d'une carte.

La carte 4A est ici supposée saillir hors de l'appareil par une extrémité de manière à pouvoir être manuellement retirée du logement, lorsqu'elle est enfoncée, ici en fond de logement, et qu'elle se trouve dans la position pour laquelle elle est apte à communiquer avec l'appareil.

Dans les réalisations ici présentées, les cartes 4, 4A et 4' sont supposées être des cartes comportant chacune des moyens de communication connus réalisés sous la forme de plots conducteurs regroupés sur une des deux faces de chaque carte pour former un module connecteur 10, 10A ou 10' destiné à coopérer avec des moyens de communication complémentaires, à contacts et de type connu, non représentés d'un appareil.

Ces moyens de communication complémentaires référencés 11 sont par contre symbolisés sur la figure 3 où ils sont montrés accolés aux moyens de communication 10 d'une carte 4.

Dans l'exemple présenté en figure 1, les modules connecteurs 10 et 10A sont supposés disposés en surface de la face de carte qui est normalement cachée lorsque la carte considérée, telle 4A, est en position déterminée requise pour une communication. Les moyens complémentaires de l'appareil sont supposés être disposés de manière à être sous ce module connecteur et en contact avec lui, lorsque la carte est en position requise. Dans cet exemple et dans celui présenté en figure 2, il est aussi supposé que l'extrémité de la carte 4A ou 4' qui porte le module connecteur 10A ou 10' vient pénétrer dans une encoche, ménagée en extrémité de logement 7 ou 7' et ici figurée en tireté, où débouchent les moyens de communication, avec une carte, que comporte l'appareil. Dans l'exemple présenté en figure 2, ces moyens sont supposés disposés sous la face avant de l'appareil et au-dessus d'une carte, telle que 4', lorsque cette dernière est en position requise de communication avec l'appareil.

Comme indiqué plus haut, les cartes comportent au moins une mémoire 5 et/ou une logique 6, par exemple une logique câblée ou un processeur, qui sont le plus souvent susceptibles d'être électriquement alimentés par l'appareil par l'intermédiaire du module connecteur de la carte qui les comporte et qui sont électriquement reliés à ce module par l'intermédiaire duquel ils communiquent avec l'appareil où ladite carte est positionnée.

L'appareil 1 comporte usuellement lui aussi au moins un processeur 12 et des mémoires 13 qui sont symbolisés sur la figure 2 et qui lui permettent de fonctionner seul ou en association avec une carte 4 ou 4', de communiquer avec de telles cartes individuellement reçues et éventuellement avec une unité distante au travers d'un équipement de transmission déterminé, référencé 14 en figure 3. Cette unité est par exemple le centre de rattachement 2 dans le cas d'un terminal téléphonique ou télématique, comme symbolisé en figure 3.

Suivant les cas ceci permet par exemple et entre autres à l'appareil 1 de fonctionner en prenant en compte des informations stockées dans la ou l'une des mémoires 5 d'une carte alors associée à l'appareil pour réaliser des opérations, ou encore en exploitant un élément de programme pour lequel l'intervention de la logique de la carte a été volontairement rendue nécessaire.

Comme indiqué dans le préambule de la présente demande, il est souvent indispensable d'effectuer des choix lors du fonctionnement d'un appareil et ces choix sont indiqués par actionnement de moyens de commande appropriés généralement portés par l'appareil. Dans les exemples proposés en figure 1 et 2, ces moyens de commande sont symbolisés, d'une part, par douze touches, globalement référencées 15 ou 15' d'un clavier de numérotation, de type téléphonique, et d'autre part, par dix touches 16 ou six touches 16' qui permettent de réaliser seules ou en combinaison différentes opérations de commande prédéterminées. Bien entendu, d'autres moyens de commande équivalents à des touches, par exemple, des clés commutatrices ou éventuellement des organes de commande à réglage progressif, sont susceptibles d'être substituées à ces dernières, si besoin est.

Comme selon l'invention, il est prévu que chacun des appareils 1 ou 1' permet de laisser visible une partie d'une carte qu'il reçoit, lorsque cette dernière est en position requise de communication avec cet appareil, il est aussi prévu de disposer au moins certains des moyens de commande de l'appareil au voisinage de la zone où vient se placer la partie visible de carte, de manière à ce que cette partie et ces moyens soient simultanément visibles pour l'utilisateur. Dans la réalisation présentée en figure 1, il est ainsi prévu de disposer des touches 16 de part et d'autre d'une ouverture, ici d'allure rectangulaire, ménagée dans la face avant 9 au-dessus du logement 7 de carte, sur la plus grande partie de ce logement. Cette ouverture découvre donc une grande partie d'une des deux faces d'une carte positionnée comme requis, cette carte étant ici supposée introduite par glissement, ses bords longitudinaux assurant son guidage en coopération avec des moyens de positionnement complémentaires et son maintien en position. Ces moyens non figurés sont par exemple des glissières rectilignes ménagées en regard dans l'appareil sous la face avant 9.

D'autres formes de réalisation sont envisageables, ainsi que le montre la figure 2, où des touches 16' sont disposées à proximité d'une fente rectiligne 17' prévue pour permettre une insertion d'une carte 4' dans l'appareil 1'. La fente 17' est supposée ménagée sur un côté 8' de l'appareil et les touches 16' forment une colonne disposée parallèlement à la fente. Ces touches sont donc visibles en même temps que la partie de carte qui saille hors de l'appareil 1' au-delà de la fente 17', lorsque cette carte est insérée dans son logement 7', en position de communication avec l'appareil comme requis.

Dans la mesure où au moins certains des moyens de commande d'un appareil, ici les touches 16 ou 16', sont à proximité de la partie d'une carte 4, 4A ou 4' reçue par cet appareil, il est possible de réaliser des repères fonctionnels visuels 17 ou 17' pointant vers ces moyens de commande, sur la partie restant visible de chaque carte pour préciser en clair ou sous forme symbolique, la fonction attribuée à chacun de ces moyens de commande, lorsque cette carte est en place.

Dans l'exemple proposé, ces repères fonctionnels visuels sont réalisés sous la forme d'un tableau comportant autant de lignes qu'il y a de touches dans une colonne, et il est prévu d'associer une indication, par exemple alphanumérique, à chaque repère 17 ou 17', soit ici dans chacune des cases de ligne, au nombre de deux par ligne pour les cartes 4 et 4A sur la figure 1 et d'une seule sur la figure 2.

Chaque repère, soit ici chaque case, vient se positionner au niveau de l'une des touches 16 ou 16', lorsque la carte qui la porte est positionnée comme requis, de manière à pointer sans ambiguïté vers une touche qui par programmation pourra être affectée à la fonction indiquée dans cette case, ceci étant réalisable, selon des techniques bien connues appliquées classiquement au niveau des touches dites reprogrammables.

Bien entendu, il est possible de réaliser des repères visuels 17 ou 17' sous des formes très différentes, notamment à l'aide de signes symbolisant la fonction réalisée, sous une forme distinctive et permettant de désigner sans ambiguïté le moyen de commande à mettre en oeuvre pour obtenir la mise en service de cette fonction au niveau d'un appareil.

Ces formes sont bien entendu destinées à être adaptées aux utilisateurs visés, de manière à éviter les erreurs d'interprétation et les doutes en cours d'exploitation.

Les choix des moyens de commande ainsi traités peuvent bien entendu être très divers et sont susceptibles de varier avec les cartes, sachant que ces cartes et ces appareils sont généralement au moins partiellement interactifs.

Il est possible d'affecter une même touche 16 ou 16' d'un appareil à des fonctions qui diffèrent suivant la carte alors reçue par l'appareil.

L'exploitation des commandes effectuées par l'intermédiaire de ces touches d'appareil, configurées en fonction de la carte alors associée à l'appareil, correspond alors à la mise en oeuvre d'opérations susceptibles d'être programmées à différents niveaux, par exemple au niveau d'une unité de supervision dont dépend éventuellement l'appareil considéré et/ou au niveau de ce dernier et/ou au niveau de la carte elle-même, si celle-ci dispose de moyens prévus à cet effet. Il y a alors des transmissions d'informations entre une carte un appareil auquel la carte est au moins temporairement associée et/ou éventuellement une unité centralisatrice de supervision, telle qu'évoquée ci-dessus, de manière que les informations nécessaires au fonctionnement envisagé soient communiquées de la ou des entités qui les détiennent à la ou les entité(s) destinée(s) à les exploiter.

Tout ceci implique que les cartes puissent être identifiées, elles contiennent donc chacune au moins une indication, par exemple une indication d'usage destinée à permettre à un appareil qui la reçoit à des fins de coopération où à une unité de contrôle auquel cet appareil est relié de déterminer quels sont les droits d'usage qui lui sont attribués.

Une indication d'usage est par exemple réservée à des cartes destinées à permettre une configuration ou reconfiguration des appareils auxquels elles sont temporairement associées pour la durée d'une telle opération.

D'autres indications d'usage peuvent permettre à différentes cartes de servir à des applications purement personnelles, par exemple de type répertoire téléphonique personnel, à des applications partagées, par exemple à exploiter des services à accès contrôlé, telle une messagerie centralisée, un réseau d'information spécialisé, un serveur particulier ou autre. Il est aussi possible de commuter un appareil d'un fonctionnement normal prévu en l'absence de carte à un autre type de fonctionnement qui lui est fonction du type de la carte alors reçue par l'appareil et qui offre généralement un accès à des facilités plus étendues.

Dans le cas d'appareils prévus pour recevoir des cartes telles que définies ci-dessus, il est possible qu'une même touche d'un même appareil puisse être affectée d'au moins deux façons différentes, si l'appareil peut recevoir des cartes de même type comportant des indications différentes. Ceci peut permettre de faire réaliser au moyen d'une même touche d'un même appareil non seulement une même opération avec une certaine différence, par exemple deux numérotations d'appel différentes avec deux cartes différentes, mais aussi deux opérations différentes, par exemple une opération de transfert pour une carte et une opération de cryptage de communication pour une autre carte.

Comme tout repérage, les indications portées par les cartes peuvent notamment être exploitées pour permettre aux détenteurs de déclencher de manière simple des opérations répétitives, elles peuvent également être exploitées pour permettre aux utilisateurs de trouver simplement comment lancer une opération qui leur est inhabituelle.

Elles peuvent aussi permettre à un détenteur de carte de retrouver les conditions d'exploitation qui lui sont habituelles sur tous les appareils aptes à coopérer avec la carte dont il dispose. Il n'a alors pas à chercher pour au moins certains d'entre eux, par exemple les plus utilisés et/ou éventuellement ceux qui sont les moins faciles à garder en mémoire, quels sont les moyens de commande nécessaires, puisque ces moyens sont visuellement repérés de manière immédiate et sans ambiguïté, dès insertion de la carte dans un appareil.

## Revendications

**1/** Agencement, notamment de télécommunications, comportant un appareil (1) agencé pour pouvoir communiquer avec des cartes (4) à mémoire et/ou à logique, de type badge, reçues individuellement en vue de la mise en oeuvre de fonctions impliquant une coopération d'une carte reçue avec l'appareil, ce dernier comportant des moyens (7) pour recevoir et positionner une carte reçue d'une manière requise déterminée leur permettant de communiquer par l'intermédiaire de moyens de communication respectifs complémentaires (10, 11), caractérisé en ce que l'appareil est doté de moyens de positionnement et de réception de carte qui permettent de voir au moins une partie d'une des deux faces d'une carte positionnée comme requis, et de moyens (16) de commande manuelle dont au moins certains sont positionnés au voisinage de la zone où se situe la partie visible d'une carte positionnée de la manière requise, chaque carte comportant des repères fonctionnels visuels (17), disposés sur une face destinée à rester visible lorsque la carte est positionnée comme requis, pour désigner chacun un moyen de commande manuelle (16) comporté par l'appareil parmi ceux qui sont disposés à proximité de la partie visible de cette carte quand celle-ci est en position requise.

**2/** Appareil, notamment de télécommunications, agencé pour être apte à communiquer avec des cartes (4) à mémoire et/ou à logique, de type badge, reçues individuellement en vue de la mise en oeuvre de fonctions impliquant une coopération d'une carte reçue avec l'appareil, ce dernier comportant des moyens (7) pour recevoir et positionner une carte d'une manière requise déterminée leur permettant de communiquer par l'intermédiaire de moyens de communication (10, 11) complémentaires respectifs, ledit appareil étant caractérisé en ce qu'il est doté de moyens de réception de carte qui permettent de voir au moins une partie d'une des deux faces d'une carte positionnée comme requis, et de moyens de commande manuelle dont au moins certains (16) sont positionnés au voisinage de la zone où se situe la partie visible d'une carte positionnée comme requis, de manière à pouvoir être visuellement en regard, notamment dans l'alignement, de repères visuels de désignation (17) correspondants portés par la partie visible de cette carte.

**3/** Appareil, selon la revendication 2, caractérisé en ce qu'il comporte des moyens de commande manuelle(16), positionnés au voisinage de la zone où se situe la partie visible d'une carte positionnée comme requis, auxquels sont impartis des fonctions déterminées en l'absence de carte et des moyens actionnés par une carte positionnée comme requis, pour substituer aux fonctions imparties à ces moyens de commande, en l'absence de carte, des fonctions dépendant de la carte positionnée, les moyens de commande faisant l'objet des substitutions étant ceux qui sont individuellement désignés par les repères fonctionnels visuels de la carte positionnée, lorsque cette dernière est positionnée comme requis.

**4/** Carte à mémoire et/ou à logique, de type badge, agencée pour être apte à communiquer avec des appareils, notamment de télécommunications, pris individuellement, en vue de la mise en oeuvre de fonctions impliquant la coopération de l'un quelconque des appareils avec la carte, préalablement positionnée d'une manière déterminée par rapport à lui, l'un et l'autre comportant des premiers moyens complémentaires pour le positionnement de la carte de la manière requise vis-à-vis de l'appareil et des seconds moyens complémentaires pour leur permettre de communiquer lorsque la carte est positionnée comme requis, caractérisée en ce qu'elle comporte des repères visuels (17), disposés sur une face de carte destinée à rester visible lorsque la carte est positionnée comme requis, pour désigner chacun un moyen de commande manuelle (16) comporté par l'appareil parmi de tels moyens disposés à proximité de ladite carte quand celle-ci est en position requise.
